# EUROPEAN PATENT SPECIFICATION

(11) **EP 4 090 040 B1**
(45) Date of publication and mention of the grant of the patent: **10.04.2024**
(21) Application number: 21173623.6
(22) Date of filing: 12.05.2021
(51) Int. Cl.: H04Q 9/00, H01M 10/42, H01M 10/48, H01M 50/204

(54) **BATTERY CELL POSITION DETERMINATION**
BATTERIEZELLENPOSITIONSBESTIMMUNG
DÉTERMINATION DE POSITION DE CELLULE DE BATTERIE

(43) Date of publication of application: 16.11.2022
(73) Proprietor: Dukosi Limited, Edinburgh EH3 8RA (GB)
(72) Inventor: Sylvester, Joel, Edinburgh, EH3 8RA (GB)
(74) Representative: Finnegan Europe LLP

(56) References cited:
- WO-A1-2018/005631
- US-A1- 2005 190 098

## Description

### Technical Field

The present disclosure relates to the field of battery technology and energy cells and discloses solutions for determining a position of a battery cell within a battery system comprising a plurality of battery cells. In particular, embodiments of the disclosure relate to a method and a system for determining a position of a battery cell within a battery system comprising a plurality of battery cells.

### Background

Battery systems, comprising a plurality of battery cells, are used in a wide range of modern electric power applications. For example, they are used to power electric vehicles, they are used in industrial power applications, in transportation, and in commercial applications such as powering of modern electronic devices. Given the relatively high-power demands of such applications, a battery system often comprises multiple battery cells coupled together to achieve the required power output. The battery cells may be coupled together to form a battery pack, and the battery system may comprise one or more battery packs.

It is common to connect a battery system to a battery management system, configured to ensure that the battery system operates within its safe operating area. The safe operating area is defined as the voltage and current conditions under which the battery system is expected to operate without self-damage. For further details, the interested reader is directed to the following Wikipedia website: https://en.wikipedia.org/wiki/Battery_management_system.

In certain known applications, performance characteristics of battery packs may be monitored and relayed to a central battery management system for safe and effective control of the battery system. A monitoring system will typically monitor the voltage and current in every battery cell in a battery pack.

If any of the battery cells of a battery pack starts to behave differently from the others, it is useful to know where the errant battery cell is physical located within the battery system as the location of the cell may impact detected measurements and may also impact the relevance of a fault.

For instance, a battery cell located near coolant intake would be expected to be colder than a battery cell located at the coolant outlet. If the battery cell at the inlet was in fact found to be hotter than the battery cell at the outlet, then this may indicate a fault.

Equally, the severity of a potential fault may be dependent on the position of the associated cell within the battery system as depending on the position of the cell within the battery system, the fault may potentially provoke a catastrophic chain reaction.

For example, an overheating cell located centrally within a battery system, in contact with adjacent cells on all its surfaces, may pose a greater risk of causing a chain reaction, than an overheating cell located near a corner of the battery system in physical contact with a single cell.

If the position of a faulty cell cannot be determined, it is common to replace an entire battery system, when a fault is identified in a battery cell within the battery system. This will often result in some individual cells within the battery system, which are otherwise functional, and operating normally, being discarded and can result in significant waste of functional cells.

Traceability of all the items in a battery system is also desirable for quality assurance.

Performance and reliability of a battery system is often dependent upon the weakest battery cell in the system. A battery management system may be able to monitor and identify a battery pack containing a weak battery cell. However, it is only possible to identify and replace a failing battery cell if it is possible to locate the battery cell which is to be replaced.

Being able to identify the location of individual battery cells within battery systems can also be beneficial in the context of product recall. For example, if a batch of battery cell is established to have a common fault, then it may be necessary to replace those cells. However, if such cells are distributed in power systems for multiple devices, then such a recall of the cells may involve recall of all devices which may incorporate a cell from a particular batch. If, however, it is possible to establish the locations of cells from the effected batch, then the size of the product recall may be restricted.

For all these reasons it can be important to know the relative positions of monitored battery cells within a battery system.

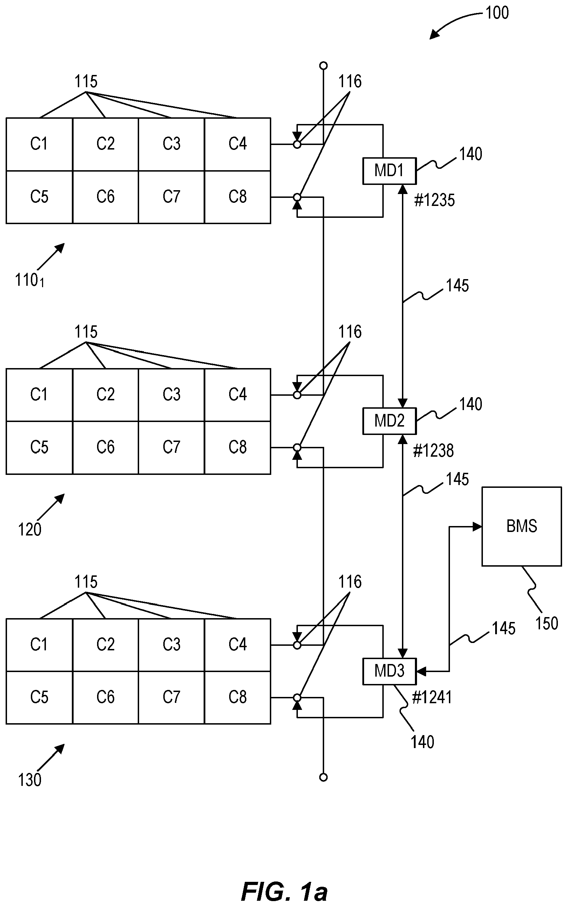

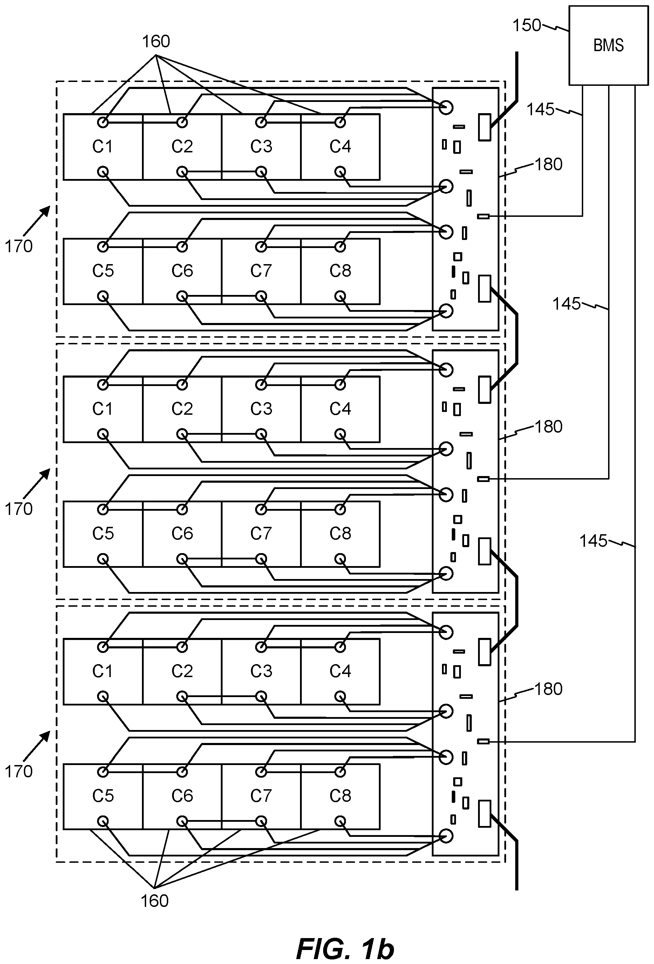

Figure 1a is a schematic illustration of a known prior art battery system 100, comprising a plurality of battery packs 110, 120, 130. Each pack comprises a plurality of battery cells 115. The cells 115 within each battery pack 110, 120, 130 are commonly connected in series, and each battery pack 110, 120, 130 comprises terminals 116, enabling electrical power to be drawn from the battery pack. In Figure 1a battery packs 110, 120, 130 are connected to each other in series. Each battery pack 110, 120, 130 may comprise a monitoring device 140, configured to measure performance characteristics of the associated battery pack 110, 120, 130. Monitoring device 140 may be arranged to be powered by its respective battery pack 110, 120, 130. In Figure 1, designations MD1, MD2, and MD3 are used to distinguish between monitoring devices 140 coupled to each battery pack 110, 120, 130, and are coupled in series (daisy chained) forming communication channel 145 terminating at battery management system (BMS) 150.

In the prior art systems of Figure 1a, the problem of identifying the battery pack 110 associated with the measurement data received by the battery management system 150, can be solved based on the hierarchical relationship between nodes present on shared communication channel 145 with battery management system 150. To illustrate this, consider an example where battery management system 150 is operatively connected to MD3 via shared communication channel 145, as illustrated. To determine the hierarchical configuration of MDs 140, battery management system 150 queries the unique ID of the monitoring device 140 that is directly connected to it - namely, MD3. MD3 responds to battery management system 150 providing its unique ID #1241. battery management system 150 now knows the unique ID of MD3 that is directly connected to it. battery management system 150 may subsequently ask MD3 to obtain the unique ID of the next monitoring device 140 directly connected to MD3 - namely, the unique ID of MD2. MD2 responds to MD3's request by providing its unique ID #1238 to MD3, which is subsequently forwarded to battery management system 150. Battery management system 150 now knows the unique ID of MD2 and knows that MD2 is operatively connected in series to MD3. Battery management system 150 may subsequently query MD2, via MD3, for the unique ID of any monitoring device 140 that is connected in series to MD2. In a similar way as was done by MD3, MD2 queries MD1 for its unique ID, #1235, which is forwarded to battery management system 150. In this way battery management system 150 is able to determine the communication hierarchy of all monitoring devices 140 connected in series within battery system 100, which is defined by the order in which they are physically connected to battery management system 150. Battery management system 150 is able to communicate with any one of MDs 140 within battery system 100 using the associated monitoring device's unique ID. It is to be appreciated that each monitoring device 140 occupies a different level in the communication hierarchy. Each monitoring device 140 is only able to communicate directly with its adjacent MDs 140, except where the subject monitoring device 140 is adjacent to battery management system 150. For a given monitoring device 140, for example MD1, communication with battery management system 150 requires using the intervening MDs 140 lying along communication channel 145 between MD1 and battery management system 150 as proxies. A shortcoming of the prior art system of Figure 1a is that it does not enable battery management system 150 or monitoring device 140 to determine the position of individual battery cells 115 within a battery pack 110, 120, 130. In particular neither battery management system 150 nor monitoring device 140 is able to associate battery cell data received from specific battery cells 115, with the position of the specific battery cell. For example, for a given battery pack 110, it is not possible for MD1 to determine the position of battery cell C7. Thus, once a potential fault is identified with a battery cell within a battery pack from received measurement data, the entire battery pack 110 associated with the faulty battery cell is still replaced in its entirety.

Figure 1b illustrates another known prior art system, in which each battery cell 160 within battery pack 170, is hardwired to monitoring device 180. The position of each battery cell C1-C8 within battery pack 170 may be mapped during assembly of battery pack 170. In use, monitoring device 180 receives measurement data from each one of cells C1-C12, and can determine the source of the received measurement data based on the pre-defined cell mapping information. Monitoring devices 180 illustrated in Figure 1b may be connected in series in a similar manner as described in relation to the prior art system of Figure 1a (connections 145 in Figure 1a). Alternatively, each measuring device 180 may be directly connected to battery management system via a direct wired connection (connections 145 in Figure 1b). Such configurations are advantageous since there is no communication hierarchy imposed on battery management system 150, and instead communication with each measuring device 180 is by direct wired connection without use of any proxies. During battery pack assembly, the position of each pack 170, each battery cell C1-C8 within the pack, and its associated monitoring device 180 may be mapped and stored for subsequent use. The position of a cell associated with received m data may be determined using the predefined position mapping data.

A shortcoming of the prior art system of Figure 1b is that it requires mapping battery cell location information during pack assembly, which increases manufacturing time and associated costs.

Further, prior art systems of the type illustrated in Figure 1b are restricted by the number connections between the battery management system 150 and the monitoring devices 180 and this can limit the flexibility of such systems compared with systems such as are illustrated in Figure 1a, in which figure additional monitoring devices can be added to the end of the chain without a change to the battery monitoring system.

Document WO 2018/005631 A1 discloses a battery system monitor including a plurality of cell measurement circuits (CMCs). The controller is configured to determine relative positions of the battery modules associated with the CMCs based on measurements received from the plurality of wireless communication transceivers.

It is an object of at least some embodiments of the present disclosure to address one or more shortcomings of the prior art systems.

### Summary of the Disclosure

One aspect of the present disclosure provides a method for determining a location of a radio receiver associated with one or more of a plurality of battery cells within the battery system, where the radio receiver is communicatively coupled via near field radio coupling to an antenna arranged as a loop. In accordance with the method a plurality of signals of different frequencies are transmitted in a first and then a second direction around the antenna. The position of the radio receiver is then determined based on an observed rate of change of phase difference with frequency of signals transmitted in different directions around the antenna observed by the radio receiver.

Methods of the disclosure may be used to determine the position of a radio receiver within a battery system irrespective of any pre-existing communication hierarchy and without the system being limited by the number of physical connections between a battery management system and of the radio receivers. Determined position information may be used to complement existing battery fault detection systems, and to assist identifying positions of faulty cells for replacement, or to trace cells for quality assurance.

Another aspect of the disclosure provides a battery system operable to associate a determined location of a radio receiver with an identifier associated with the radio receiver. The battery system includes an antenna configured as a loop and a plurality of radio receivers associated with battery cells in the system. The radio receivers are communicatively coupled with the antenna via near field radio coupling at different positions along the length of the antenna. In use, a controller causes a radio manager to transmit a plurality of signals of different frequencies in a first and then a second direction around the antenna and determines the position of a radio receiver along the length of the antenna based on an observed rate of change of phase difference of signals transmitted in different directions around the antenna with frequency observed at the radio receiver.

In some embodiments the relative differences of rates of change of phase difference observed by different radio receivers arranged along the length of an antenna can be used to determine an ordering of radio receivers along the length of the antenna. In other embodiments, the absolute locations of radio receivers within the battery system can be determined based on observed rate of change of phase difference of signals transmitted in different directions around the antenna with frequency together with information regarding the configuration of the antenna within the battery system.

Another aspect of the disclosure provides a method of maintaining a battery system in which a plurality of monitoring devices are used to monitor characteristics of battery cells, The method comprises: determining a fault condition associated with the one or more battery cells has occurred; and determining the location of the monitoring device monitoring battery cells with characteristics indicative of a fault having occurred, wherein the location of the monitoring device is determined by: transmitting a plurality of signals of different frequencies in a first and then a second direction around an antenna; determining the position of a monitoring device along the length of the antenna based on an observed rate of change of phase difference with frequency of signals transmitted in different directions around the antenna observed by that monitoring device. When the location of the monitoring system monitoring the faulty cell has been determined, that cell can then be replaced.

Another aspect of the disclosure provides a controller for a battery system comprising a processor and a memory, wherein the memory is stores processor implementable instructions to cause the processor to instruct a radio manager to transmit a plurality of signals of different frequencies in a first and then a second direction around an antenna configured as a loop; and determine the position of a radio receiver along the length of the antenna based on an observed rate of change of phase difference with frequency of signals transmitted in different directions around the antenna observed at the radio receiver; and associate the determined position with an identifier associated with the radio receiver.

In accordance with another aspect of the disclosure there is provided a monitoring device for a battery system comprising a radio transmitter, a radio receiver, a processor and a memory, wherein the memory stores processor implementable instructions which cause the processor to: process signals of different frequencies transmitted in different directions around an antenna configured as a loop received by the radio receiver and determine a phase difference between signals of the same frequency transmitted in different directions around the antenna; and cause the radio transmitter to transmit data indicative of observed phase differences.

A further aspect of the disclosure provides a non-transitory computer readable medium for configuring a controller or a monitoring device.

### Brief Description of Drawings

Further aspects and embodiments will become apparent from the following description and accompanying drawings in which:
Figures 1a and 1b are schematic illustrations of known prior art battery systems, which have both been described in detail above in the background section;
Figure 2 is a schematic illustration of a battery system, in accordance with an embodiment of the disclosure;
Figure 3 is a schematic illustration of a monitoring device for monitoring a battery cell within a battery system in accordance with an embodiment of the disclosure;
Figure 4 is an exemplary circuit diagram of a radio receiver of a monitoring device for monitoring a battery cell in accordance with an embodiment of the disclosure;
Figure 5 is a schematic overview for explaining how the measured phase of detected signals varies with position when signals are sent in different directions around an antenna configured as a loop;
Figure 6 is process flow chart illustrating a method for determining the position of a battery cell using the apparatus of Figure 2;
Figure 7 is an illustration of an exemplary control signal defining a switching sequence for applying a signal to an antenna configured as a loop;
Figure 8 is a process flow chart illustrating a method of processing a set of signals to determine a set of phase difference measurements for signals transmitted in different directions around an antenna configured as a loop;
Figure 9A is an exemplary illustration of I and Q measurements derived by a radio receiver of a monitoring device from an antenna configured as a loop to when signals are applied to different ends of the loop;
Figure 9B is a phase diagram of phase measurements derived from the I and Q measurements of Figure 9A;
Figure 9C is the phase diagram of Figure 9B after correcting for discontinuities;
Figure 9D is the phase diagram of Figure 9C after further correction;
Figure 10 is an exemplary plot of determined set of phase differences between signals sent in different directions around an antenna configured as a loop for a set of frequencies as observed by a monitoring device; and
Figure 11 is an exemplary plot of phase differences between signals sent in different directions around an antenna configured as a loop for a set of frequencies observed by a set of monitoring devices arranged around an antenna.

### Detailed Description of Embodiments

In the following illustrative description of embodiments, like numbered reference numerals appearing in different figures will be used to refer to shared features.

Different embodiments of the present disclosure provide different solutions enabling the locations of a set of monitoring devices monitoring battery cells within a battery system to be determined.

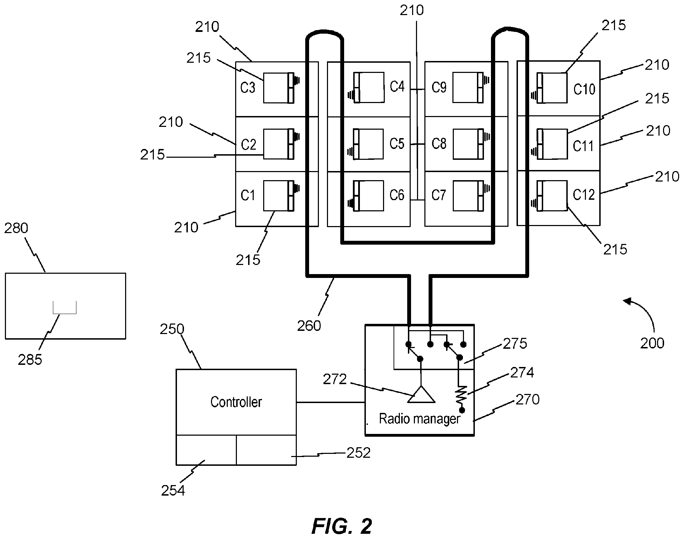

Figure 2 is a schematic illustration of an arrangement of battery system 200 comprising a plurality of battery cells 210 where each battery cell 210 is monitored by an associated monitoring device 215. Battery cells 210 within battery system 200 may be electrically coupled to one another, and battery system 200 may comprise electrical terminals enabling electrical power to be drawn from battery system 200.

In the embodiment of Figure 2, each monitoring device 215 is configured to transmit data to and receive data from controller 250 via near field radio coupling with antenna 260 configured as a loop starting and returning to radio manager 270 connected to controller 250.

In embodiments, antenna 260 may comprise a single wire, a twin-core cable, a twisted cable pair, a coaxial cable, a triaxial cable, a microstrip, a strip line or a coplanar line.

It will be appreciated that as monitoring devices 215 are connected to controller 250 via antenna 260 and near field radio coupling, the above-described system is not limited by the numbers of wired connections between controller 250 and monitoring devices 215. However, as there are no direct wired connections between monitoring devices 215 and controller 250, there is no fixed hierarchy between monitoring devices 215, which controller 250 can use to identify the locations of monitoring devices 215 within the system.

Controller 250 may comprise processor 252 and memory 254. Memory 254 may store a single program, that performs the functions associated with the disclosed embodiments, or may comprise multiple software programs. In embodiments, memory 254 may include one or more storage devices configured to store data for use by processor 252 and may comprise flash memory, random access memory (RAM), read-only memory (ROM), a hard drive, a solid-state drive, a CD-ROM drive, a peripheral storage device (e.g., an external hard drive, a USB drive, etc.), a database, a network drive, a cloud storage device, or any other storage device.

Radio manager 270 may comprise switch 275 which under the control of controller 250 switches the direction around antenna 260 along which signals are transmitted by alternately connecting either end of antenna 260 to signal generator 272 or to a matched impedance 274.

As will be described in detail, in use controller 250 causes a series of continuous single tone signals at a set of different frequencies generated by signal generator 272 to be applied to antenna 260. At the same time, controller 250 causes radio manager 270 to operate switch 275 so that the generated signals are alternately applied to either end of antenna 260 while connecting the other end of antenna 260 to matched impedance 274. The relative locations of each monitoring device 215 around antenna 260 may then be determined by measuring the phase difference between signals transmitted via antenna 260 by monitoring devices 215 as a signal generated by signal generator 272 is applied to either end of antenna 260.

In Figure 2, battery cells 210 are shown as being arranged in a two-dimensional grid comprising rows and columns of battery cells across a single surface. More specifically, in Figure 2, battery system 200 is shown comprising four columns of battery cells: a first column comprising battery cells C1-C3, a second column comprising cells C4-C6, a third column comprising cells C7-C9 and a fourth column comprising cells C10-C12. In the case of the system of Figure 2, battery cells C1-C12 are arranged in consecutive order along antenna 260, with each monitoring device 215 associated with cells C1-C12 also being adjacent to and arranged along the length of antenna 260.

It will be appreciated that the illustration of Figure 2 is purely exemplary and that the present disclosure is not limited to systems having a particular number of battery cells 210 and other configurations of battery cells 210 are also envisaged. For example, battery cells 210 may be arranged in a three-dimensional stack. Furthermore, the present disclosure does not require battery cells 210 or monitoring devices 215 to be evenly distributed along antenna 260. Rather monitoring devices 215 may be arranged in any manner along the length of antenna 260 provided there is sufficient separation between each monitoring device 215 along antenna 260 so that distinguishable phase data is observable at each monitoring device 215.

Similarly, in Figure 2, antenna 260 is shown as a loop having two lobes. It will be appreciated that other configurations of antenna 260 could be utilized and would be appropriate depending upon the configuration of battery cells 210. More specifically it will be appreciated that any suitable configuration of antenna 260 could be utilized provided that the configuration begins and terminates at radio manager 270 and that monitoring devices 215 associated with battery cells 210 whose relative positions are to be determined are arranged along the length of antenna 260 and sufficiently close to antenna 260 so that monitoring devices 215 are able to receive signals transmitted by controller 250 via radio manager 270 and transmit signals back to controller 250 via antenna 260.

In some embodiments rather than comprising a single antenna 260, battery system 200 may comprise a plurality of antenna 260, each configured to determine battery cell positions in different sections of battery system 200. For instance, a battery system in accordance with the present disclosure could comprise a plurality of battery packs each having a dedicated antenna 260 for transmitting and receiving signals for monitoring devices 215 associated with cells 215 in that battery pack.

In an embodiment, computer-readable medium 280 is provided comprising instructions 285 for configuring processor 252 to perform the methods described below. In an embodiment, monitoring devices 215 may also be configurable devices configurable via instructions 285 stored on computer-readable medium 280.

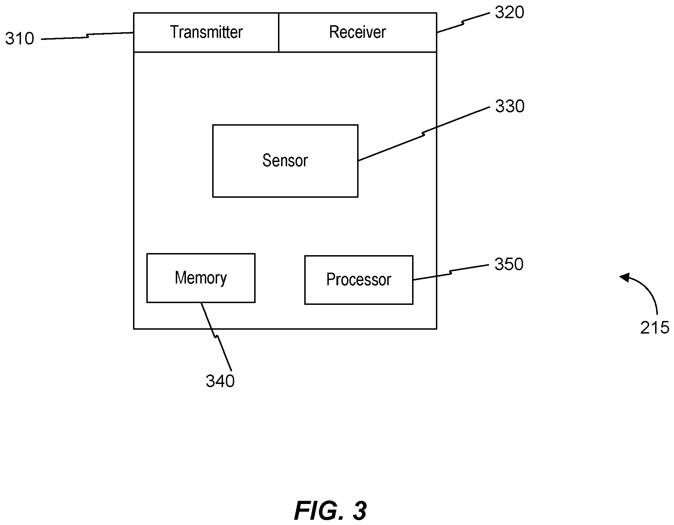

Figure 3 is a schematic illustration of an exemplary monitoring device 215 for use in battery system 200, in accordance with an embodiment of the disclosure.

Each monitoring device 215 may comprise radio transmitter 310 for transmitting data to controller 250 via antenna 260 and radio receiver 320 for receiving data from controller 250 via antenna 260.

In embodiments, radio transmitter 310 and radio receiver 320 of monitoring device 215 may be configured for communication using a protocol such as Bluetooth ^{®}, ZigBee or any other protocol capable of transferring data between monitoring device 215 and controller 250, via antenna 260. In embodiments, each monitoring device 215 is coupled to antenna 260 via radio transmitter 310 and radio receiver 320 using near-field electromagnetic coupling. The use of near field coupling localizes the region where coupling occurs along antenna 260 to a region comparable in size to radio receiver 320, assisting with the accuracy with which the relative locations of battery cells 210 may be determined.

In addition to comprising radio transmitter 310 and radio receiver 320, each monitoring device 215 may also comprise one or more sensors 330 for determining characteristics of a battery cell or a group of battery cells associated with monitoring device 215. In embodiments, the one or more sensors 330 may comprise a voltage measurement device; a current measurement device; and/or a temperature measurement device.

Monitoring device 215 may also comprise memory 340 and processor 350.

Memory 340 may include transitory and/or non-transitory memory. Memory 340 may store instructions for causing processor 350 to process data obtained from sensors 330 and/or signals received via radio receiver 320. Memory 340 may also provide one or more storage facilities for storing data determined by processor 350, which may comprise, for example, measured phase difference and frequency data, cell position data, and/or fault detection/battery cell health data. In some embodiments, memory 340 may also store a unique ID which can be included in transmissions from monitoring device 215 to controller 250 via radio transmitter 310 and antenna 260 enabling controller 250 to identify which monitoring device 215 is associated with which transmissions.

Processor 350 may take the form of, but is not limited to, a microprocessor, embedded processor, or the like, or may be integrated in a system on a chip (SoC). Furthermore, according to some embodiments, processor 350 may be from the family of processors manufactured by Intel^{®}, AMD^{®}, Qualcomm^{®}, Apple^{®}, NVIDIA^{®}, or the like. The processor 350 may also be based on the ARM architecture, a mobile processor, or a graphics processing unit, etc. The disclosed embodiments are not limited to any specific type of processor.

Processor 350 enables monitoring device 215 to process measurements received from sensor 330 and/or determine a characteristic of a battery cell or group of battery cells to which monitoring device 215 is coupled. Processor 350 also facilitates data processing of signals received by the radio receiver 320 via antenna 260 and co-ordinates the transmission of signal back to controller 250 via radio transmitter 310 and antenna 260.

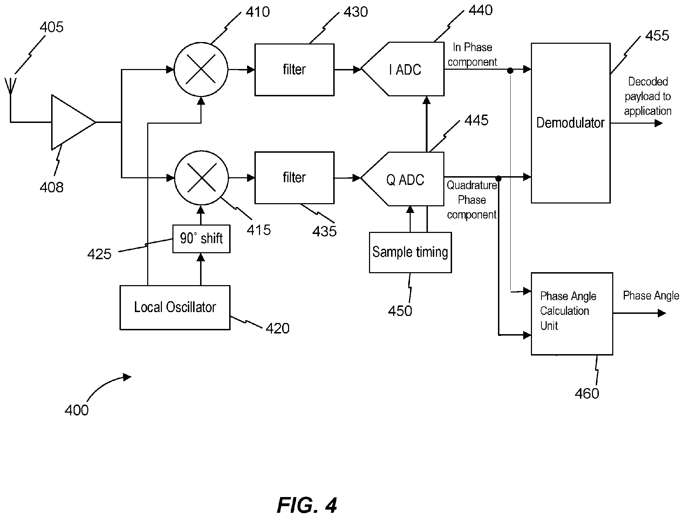

An exemplary circuit diagram of radio receiver 320 of monitoring device 215 is shown in Figure 4.

Radio receiver 320 may comprise antenna 405 which is connected, via amplifier 408, to first multiplier 410 and second multiplier 415. First multiplier 410 is arranged to multiply a signal received by antenna 405 by a signal generated by local oscillator 420. Second multiplier 415 is arranged to multiply the signal received by antenna 405 by the signal generated by local oscillator 420 which has been phase shifted by 90° by 90° shift circuit 425. The outputs of the first and second multipliers 410,415 are passed via filters 430, 435 to I and Q Analog Digital Convertors (ADCs) 440,445 which receive an input from sample timing circuit 450 and process the signals received via the filters 430,435 to output an in-phase (I) and a quadrature component (Q) of the signal received by antenna 405.

When a radio signal is transmitted along antenna 260 as a modulated carrier, the signal will be detected by antenna 405 of monitoring device 215 coupled to the antenna 260 via near field radio coupling. The above-described architecture then causes the received signal to be amplified and then multiplied by a tone generated by local oscillator 420 and an equivalent tone shifted 90° in phase.

The tone generated by local oscillator 420 may be offset relative to the carrier frequency of a radio signal transmitted along antenna 260. Alternatively, the tone generated by local oscillator 420 may be set at the same frequency as the carrier signal. If the tone is set to be the same frequency as a carrier signal, then filters 430,435 will comprise low pass filters. Alternatively, if the tone generated by local oscillator 420 is offset relative to the carrier frequency of the radio signal is transmitted along antenna 260 then filters 430,435 will comprise band pass filters.

The output of filters 430,435 is then sampled by ADCs 440,445. The ADC sampling by the I-phase ADC 440 of the signal multiplied by the signal output from the local oscillator is the derived in-phase or I data stream of the original signal. Whereas the ADC sampling of the signal multiplied by the signal output from the local oscillator shifted by 90° by the Q-phase ADC 440 is the derived Quadrature or Q data stream of the original signal.

In normal use, the derived in-phase and quadrature components are then passed to demodulator 455 which demodulates the signal according to the radio communications protocol used, and outputs a decoded signal to processor 252 within monitoring device 215 for interpretation.

In addition, in accordance with the present disclosure the derived in-phase (I) and quadrature component (Q) of the signal received by antenna 405 may be passed to phase angle calculation unit 460 for determining the phase angle of the signal received by antenna 405 which as will be described can be processed by processor 350 to determine a phase difference measurement from which the relative location of monitoring device 215 along antenna 260 and by implication the location of battery cell or group of cells monitoring device 215 is arranged to monitor can be derived.

In some embodiments, the phase angle of the signal received by antenna 405 may be calculated directly using a phase domain ADC, thereby avoiding the need to convert the derived IQ data into a phase angle.

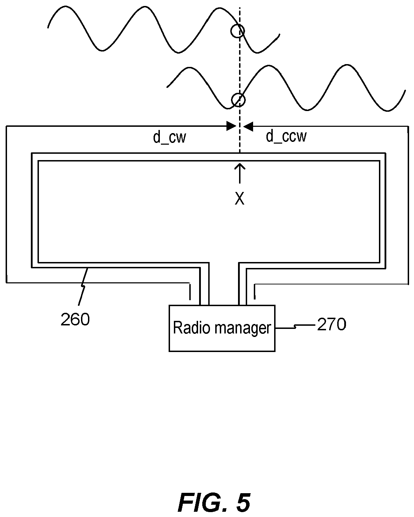

Referring now to Figure 5 to explain how the position of a radio receiver 320 around antenna 260 may be determined, when a signal is sent in a first direction, say clockwise around antenna 260, radio receiver 320 located at a particular point x a distance d_cw along antenna 260 will receive a signal that has propagated over a distance d_cw. Conversely when a signal is sent in a second direction, say counterclockwise around the loop, radio receiver 320 will receive a signal that has propagated over a distance d_ccw where d_cw + d_ccw will equal the total length of loop antenna 260. The differences in the propagation path length when a signal is sent in one direction or the other will result in a difference in the phase of the signal received. This can be detected as a phase difference relative to the signal generated by local oscillator 420 of radio receiver 320 for the signals transmitted in different directions along loop antenna 260.

The measured phase in any one direction will be equal to the phase difference between the propagating carrier signal transmitted along antenna 260 and the signal of local oscillator 420 of radio receiver 320 and will be dependent upon both the frequency of the signal and the propagation path lengths d_cw or d_ccw. The effect of any difference between the propagating carrier signal and the signal of local oscillator 420, can, however be nullified by subtracting the detected phase of a signal sent in one direction around antenna 260 from the detected phase of a similar signal sent in the other direction around antenna 260. In doing so, the phase of local oscillator 420, which is common to both measurements, will be cancelled out and a measurement obtained which is solely depending upon the wavelength of the signal and the difference between the propagation path lengths around antenna 260 can be obtained.

At the exact center of the loop, the phase path lengths d_cw and d_ccw will be equal so the phase difference between signals transmitted in different directions around antenna 260 will be zero. At other positions along antenna 260, such a phase difference value will be in the range, 0 to pi radian, ±pi radians, or 0 to 360 degrees depending on the coding method used.

The same phase difference value may be detected at different points around loop antenna 260, dependent upon the wavelength of the carrier signal.

Thus, for example at point x d_{cw} around the loop will give rise to the same detected phase difference as every other point an integer multiple of the distance of λ/2 along the loop antenna 260. That is to say, the same phase difference between signals of a particular frequency transmitted in different directions around antenna 260 would be detected at point d_{cw} as at point d_{cw} + λ/2, d_{cw} + 2λ/2, d_{cw} + 3λ/2 etc. along the length of loop antenna 260.

At other points around loop antenna 260 the phase difference will vary from this amount by an amount proportional to the difference between d_cw and d_ccw.

Typically, in an embodiment, the total length of antenna 260 will be in the order of 0.5-5 meters in length. Carrier signals will be transmitted at a frequency of around 2.4 GHz and will have a wavelength of around 8-12.5 cm. Hence in most embodiments, obtaining a phase difference value for signals at a single frequency will not be sufficient to uniquely identify a position around loop antenna 260.

If the loop length is greater than half of the wavelength of the propagation signal (as will typically be the case), then a second phase difference can be measured at a second frequency f₁+Δf. And further measurements can be made at further different frequencies, fi+2Δf, f₁+3Δf, etc. until sufficient measurements are made so that the relative location of radio receiver 320 of monitoring device 215 around loop antenna 260 and by implication the position of battery cells 210 associated with monitoring devices 215 within a battery system 200 to be determined.

More generally, increasing the number of different frequencies for which phase difference measurements are obtained, increases the accuracy and robustness with which location may be determined. Accuracy is improved because as more measurements are taken, the ambiguity of the measurements is reduced. Further, the accuracy is also improved because, reliance on relatively small phase difference measurements which are particularly susceptible to error can be reduced.

In an embodiment in which the Bluetooth near field transmissions are utilized, there are 40 possible frequencies at 2MHz intervals around 2.4GHz which can be utilized as carrier frequencies. Hence in an embodiment utilizing Bluetooth near field transmissions, phase difference values may be obtained for 40 different frequencies.

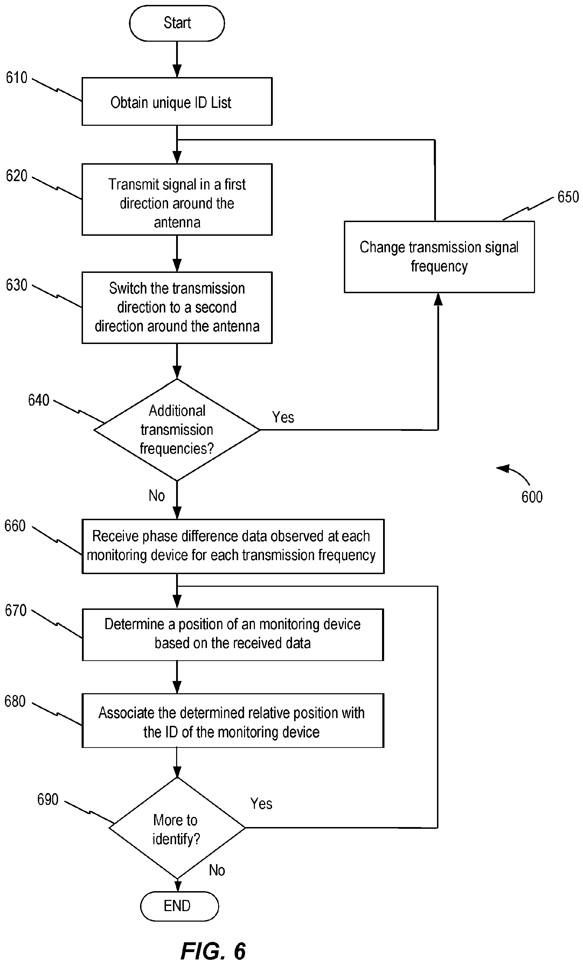

The generation and processing of signals transmitted via antenna 260 in accordance with an embodiment of the present disclosure will now be described in greater detail with reference to Figures 6-11.

Figure 6 is process flow chart illustrating a method 600 for determining the position of a battery cell 210 using the arrangement of Figure 2, in accordance with an embodiment.

As an initial step 610, controller 250 may obtain, a list of the unique IDs stored within memories 340 of monitoring devices 215 associated with battery cells 210 of battery system 200.

Obtaining a list of unique IDs enables controller 250 to associate individual signals or transmissions with particular monitoring devices 215 when monitoring devices 215 subsequently transmit signals which include a unique ID associated with a particular monitoring device 215. This then enables controller 250 to associate individual signals or transmissions with measurement from sensors 330 of the associated monitoring device 215 monitoring the behavior of particular battery cells 210 within battery system 200.

The unique IDs associated with monitoring devices 215 may be obtained in different ways. In some embodiments, controller 250 may be pre-configured with the unique ID list stored in memory 254. In other embodiments, the unique ID list may be received by controller 250 from external memory or cloud storage. Alternatively, in other embodiments controller 250 may cause a request to be sent via antenna 260 requesting that each of monitoring devices 215 broadcast their associated unique IDs and controller 250 may compile a list of unique IDs from signals received from monitoring devices 215 in response to the request.

When unique IDs have been received from all of monitoring devices 215, the list of unique IDs is compiled into a list which is stored in memory 254 of controller 250. When this is completed, controller 250 will therefore be aware of the unique IDs of the monitoring devices 215 of system 200. However, the position of each monitoring device 215 associated with a specific unique ID will be unknown, which prevents any association of data received from monitoring devices 215 to battery cell 210 at a specific location within battery system 200.

Having stored the list of the unique IDs, controller 250 then causes radio manager 270 to transmit 620 a signal at a first frequency in a first direction around antenna 260 (e.g., clockwise, or anticlockwise) and then vary 630 the direction around antenna 260 around which the signal is transmitted. This may be achieved by controller 250 alternately instructing radio manager 270 to cause switch 275 to connect one end of antenna 260 to signal generator 272 and ground the other end of antenna 260 and then instructing switch 275 to apply the signal to the other end of antenna 260 while grounding the end of antenna 260 to which the signal was originally applied.

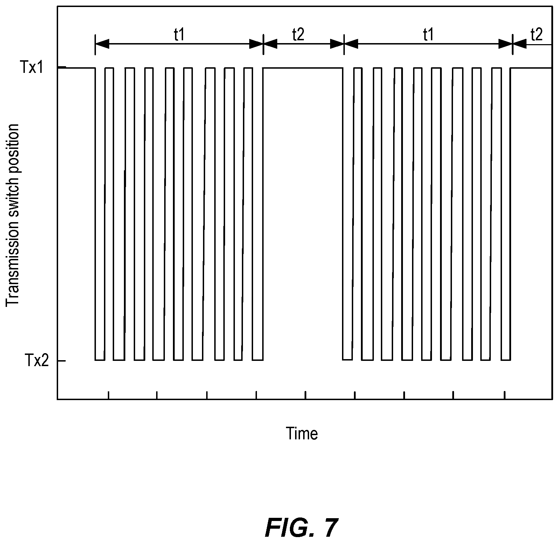

Figure 7 is an illustration of an exemplary control signal for varying a transmission direction of a transmission around antenna 260. In this example, the control signal comprises first period t1, during which radio manager 270 is instructed to repeatedly switch the transmission direction between a first direction Tx1 and a second direction Tx2. The illustrated signal further comprises a reference period t2 during which radio manager 270 is instructed to keep the transmission direction around antenna 260 constant. In an embodiment, the transmission sequence may be repeated at a period T equal to t1 + t2, as illustrated in Figure 7.

In some embodiments data may be transferred between controller 250 and the one or more monitoring devices 215 during a period t2 using a data communications protocol when the direction of a signal around antenna 260 is constant. If data is transmitted during this period, the received data may be ignored for the purposes of position determination, with the exception of any preamble data described below. The provision of reference period t2 is not essential. However, a reference period t2 can improve the accuracy of position determination by facilitating cancelation of residual frequency errors in a received signal. In some embodiments, a guard period may be provided between transmission switches to reduce signal noise resulting from reflected waves in antenna 260.

The signal transmitted by radio manager 270 may comprise a continuous tone of a particular frequency generated by signal generator 272 applied to one end of antenna 260 while the other end is attached by switch 275 to matched impedance 274.

In some embodiments, the signal transmitted by radio manager 270 around antenna 260 during a period of time t2 when the propagation direction of a signal around antenna 260 is constant may include a preamble indicating timing of the start of a subsequent switching period t1. For embodiments in which the switching sequence of the transmitted signal is unknown to monitoring devices 215 in battery system 200, the provision of switching sequence data in a preamble of the transmitted signal enables monitoring devices 215 of battery system 200 to sample the correct portions of the received signal. This assists in ensuring that each monitoring device 215 collects and processes data associated with the same portion(/s) of the transmitted signal.

Returning to Figure 6, having applied 620, 630 a signal of a first frequency repeatedly to either end of antenna 260, controller 250, then 640 determines if transmissions of signals of all frequencies have been applied. If this is not the case controller 250 instructs signal generator 272 of radio manager 272 to vary 650 the frequency of the signal applied to antenna 260. Steps 620 and 630 may then be repeated for one or more different transmission frequencies. Controller 250, then 640 determines once again if transmissions of signals of all frequencies have been applied.

In this way, signals of different frequencies are applied to antenna 260 with the direction around antenna 260 in which the signal are propagated being periodically varied. This continues until controller 250, determines 640 that transmissions of signals of all frequencies have been applied to antenna 260.

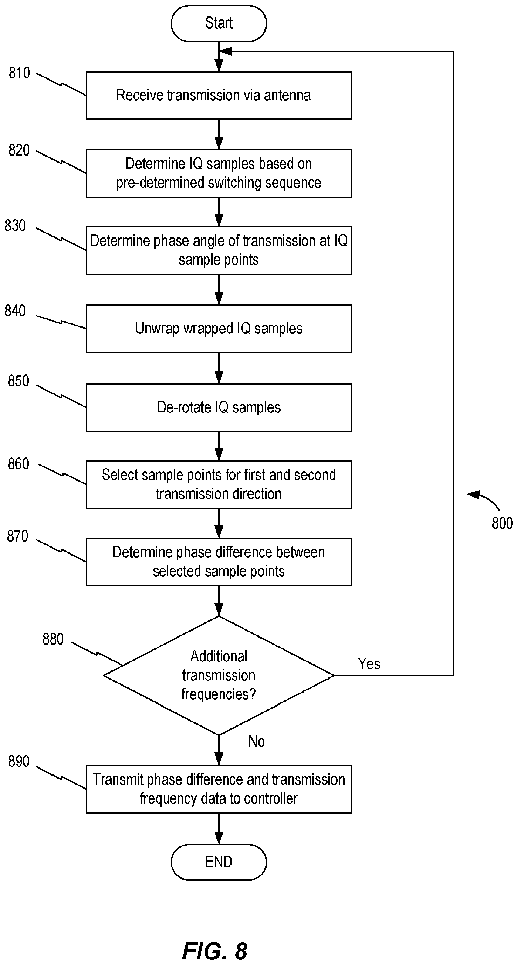

Figure 8 is a process flow chart illustrating a method 800 of processing signals received by a monitoring device 215 to obtain a set of phase difference measurements for a set of transmission frequencies from which the position of monitoring device 215 may be derived.

Initially, monitoring device 215 receives 810 a transmission signal at a first frequency via antenna 260. As described above this may be a continuous tone signal whose transmission direction around antenna 260 is varied in accordance with the control signal of Figure 7. The use of a continuous tone signal may reduce error and the amount of signal processing required to extract phase data from the received signal.

Radio receiver 320 within monitoring device 215 then processes 820 the received signal to extract I and Q samples from the received signal. In the case of radio receiver 320 shown in Figure 4 these signals are obtained output by I and Q ADCs 440 and 445 and passed to the phase angle calculation unit 455.

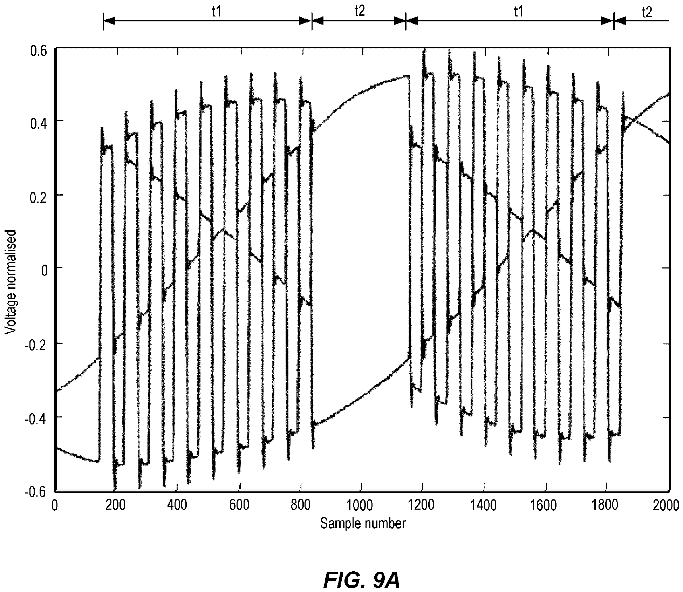

Figure 9A is an exemplary illustration of I and Q samples of an exemplary continuous tone signal derived by radio receiver 320 of monitoring device 215 from antenna 260 where the direction of the signal along antenna 260 is varied in the manner indicated by Figure 7.

The smooth sections of the curves in Figure 9A correspond to derived I and Q values when a constant tone is applied to one end of antenna 260 without varying the end to which the signal is applied and corresponds to the reference period t2 in the signal of Figure 7. Whereas the other sections of the curve correspond to derived I and Q values for the switching period t1 where the signal is alternately applied to either end of antenna 260.

The underlying sine wave shape apparent in Figure 9A represents the residual frequency difference between local oscillator 420 of radio receiver 320 of monitoring device 215 and the signal generated by signal generator 272 of radio manager 270 manifesting as a residual tone.

The signals output by the I and Q ADCs 440 and 445 are then converted 830 by phase angle calculation unit 455 into phase angle measurements. A phase angle for the signal relative to the phase of the signal generated by local oscillator 420 can be determined by phase angle calculation unit 455 by treating IQ samples received from ADCs 440 and 445 as a complex value, with the I sample denoting the real part of the complex signal, and the Q part the imaginary part with the phase angle of the signal being the angular polar co-ordinate of the complex number represented by the IQ sample when the IQ sample is plotted on the complex plane.

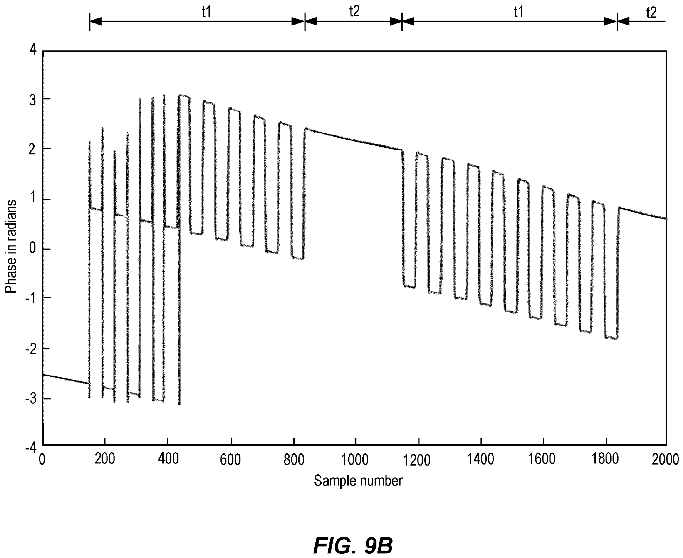

Figure 9B is a phase diagram illustrating the result of calculating phase angle measurements using the IQ samples taken from Figure 9A. More specifically, figure 9B shows the result of calculating the phase from the IQ samples in Figure 9A by determining *θ*(t) =tan⁻¹(I(t)/Q(t)). The slow sine and cosine curves in Figure 9A now manifest as a linear progression in the phase in Figure 9B.

The absolute phase values derived by processing the derived I and Q values (or alternatively, from a phase domain ADC) will be dependent on the free running local oscillator frequency and phase. Without knowledge of the phase of the signal generator oscillator, the phase value presented is arbitrary and, as is shown in the Figure, discontinuities occur where this valued 'wraps' around at ±π.

Having calculated a set of phase difference angles, the phase difference angles can then 840 be processed using conventional unwrapping techniques known in the art to remove the discontinuities present in the data whenever the phase is seen to jump at ±π.

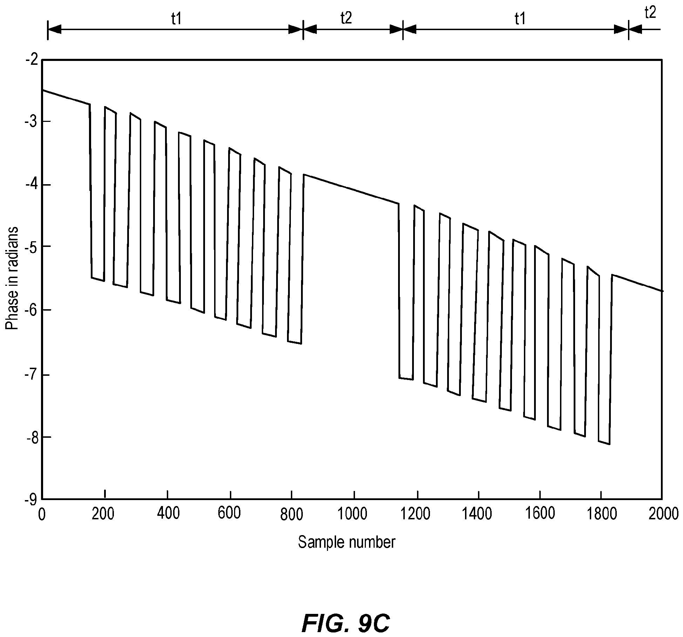

Figure 9C is illustrative of the phase difference measurements of Figure 9B after such a correction. This removes discontinuities in the data. The result is to straighten out the plot as is shown in Figure 9C, by permitting the phase measurements to range beyond ±π.

Having processed the data to remove the discontinuities, a de-rotation technique is applied 850 to the data to correct the data for residual phase error. The residual phase error is the result of discrepancies between the frequency of the transmitter and receiver local oscillators and is the cause of the slow sine curve in Figure 9A. This can be achieved using conventional de-rotation techniques known in the art. In some embodiments in which a continuous tone is transmitted during a reference period without switching the end of antenna 260 to which a continuous tone is applied, the rate of change of phase observed during the reference period may be is used to determine the correction to apply to de-rotate the data and apply a correction to the data to correct for residual phase error.

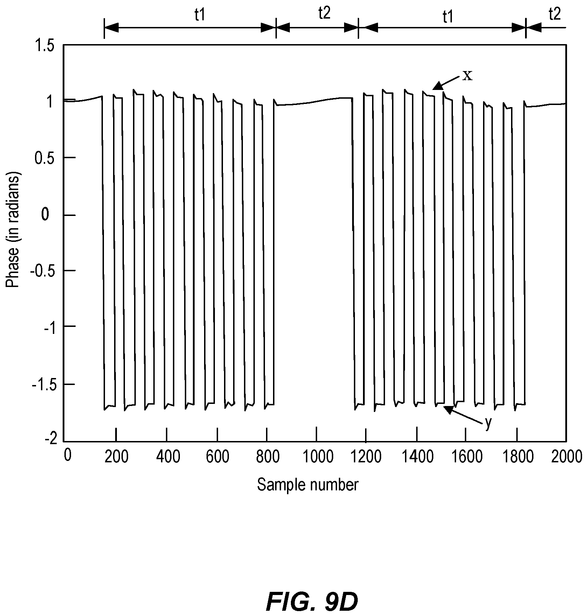

Figure 9D is an exemplary illustration of the phase diagram of Figure 9C after applying de-rotation.

The above processing enables the voltages of the signal received by radio receiver 320, to be converted into a form in which phase differences arising from the application of a continuous tone to either end of antenna 260 can be determined. As noted above, such phase differences will be dependent upon the relative location of receiver 320 along the length of antenna 260.

To obtain this phase difference data, a first sample point x and second sample point y (one for each transmission direction) is selected 860 from the resultant IQ samples (shown in Figure 9D). The locations of these sampling points may vary and will be dependent on the sampling rate. Typically, one or more samples will be taken towards the end of the settled period on each slot of the transmission sequence to improve accuracy. The selected sample points are used to determine, at step 870, a phase difference between the transmission received from the first and second direction (x-y) corresponding to period t1 of the signal illustrated in Figure 7. This measured phase difference is then stored in memory 340 of monitoring device 215.

In Figure 9D, it will be apparent that some residual ripple is still visible on Tx1 side of the signal (top of the graph). This residual phase error is a harmonic and arises because the local oscillator signal may not be a pure tone. In some embodiments, a plurality of sample points at one or more of the slots across t1 may be used rather than a single sample point, such that an average phase may be calculated for each transmission direction which will reduce the influence of any such residual errors and improve the signal to noise ratio of the measurement.

When the processing of Figure 8 is repeated 880 for each of the signals of a different frequency transmitted by via antenna 260, this will cause a series of phase difference measurements to be obtained and stored in memory 340 of monitoring device 215.

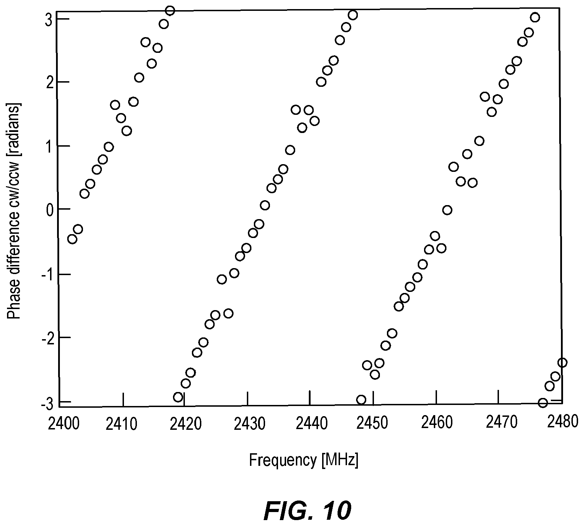

Figure 10 is an exemplary plot of phase differences against frequency for signals received by monitoring device 215 at a particular location. In the case of the illustration of Figure 10, there are various discontinuities shown where the calculated differences wrap around at ±π radians. However, looking at the Figure it should be apparent that ignoring these discontinuities and some variation due to measurement errors, the phase differences vary in a consistent manner. This is because how the phase differences vary is dependent upon the difference in propagation path length along antenna 260. That is to say that slope or gradient of the line is proportional to d_{cw} - d_{ccw}. Where the differences between frequencies Δf are sufficiently small that the phase difference from one frequency to the next does not cause the phase difference to wrap around at ±π, then the slope of the plot can be used to determine the position of receiver 320 along antenna 260.

It will be appreciated that at a minimum, two frequencies are needed to find a slope to establish a relationship between phase difference and transmission frequency. If the frequencies are close, then the likelihood of the phase wrapping is small. However, the error on the slope measurement will be high. For this reason, it can be preferable to have a variety of phase difference samples at closely spaced frequencies (to identify wrapping) and spanning a large frequency range (to best calculate the slope). Further it will be appreciated that some errors may occur in processing. For this reason, it is preferable that phase difference measurements at multiple frequencies are obtained. As noted above, an embodiment in which the Bluetooth near field transmissions are utilized is envisaged. There are 40 possible frequencies at 2MHz intervals around 2.4GHz which can be utilized as carrier frequencies. Hence in an embodiment utilizing Bluetooth near field transmissions, phase difference values may be obtained for 40 different frequencies.

When phase difference data for each of the different frequency signals have been obtained, the phase difference data may be transmitted 890, by monitoring device 215, back to controller 250 together with a copy of the unique identifier stored in the memory 340 of monitoring device 215.

Returning to Figure 6, controller 250 may request and receive 660 the phase difference data from each of monitoring devices 215.

In other embodiments rather than measured phase difference data, monitoring devices 215 could transmit data representative of the signals received by monitoring devices 215 and the conversion of such data into phase difference data could be undertaken centrally by controller 250. It is preferrable however, that only the observed phase differences and corresponding transmission frequencies are transmitted, as this will reduce the amount of data transmitted by monitoring devices 215 back to controller 250.

Once received by controller 250, controller 250 can use the phase difference data associated with each unique identifier to determine 670 the relative position of each of monitoring devices 215 around antenna 260.

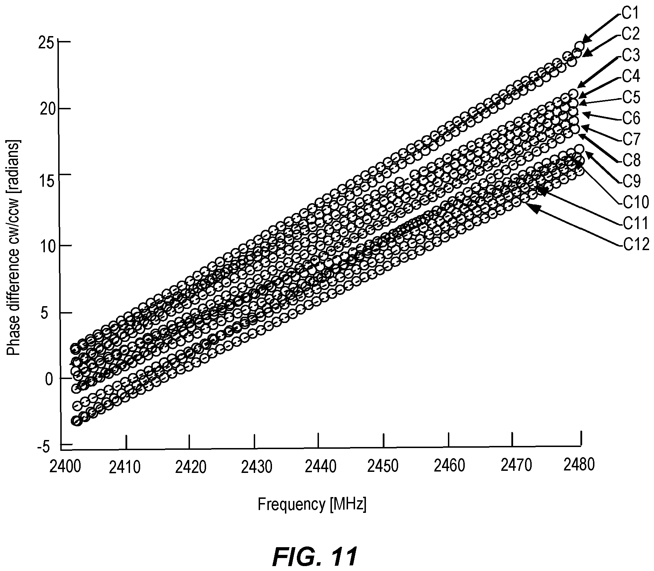

Figure 11 is a phase difference plot of phase difference and transmission frequency data received from an exemplary set of monitoring devices 215 of battery system 200 in accordance with the present disclosure. In the case of the data of Figure 11, an unwrapping algorithm has been applied to the data for each of the monitoring devices so that, unlike the graph shown in Figure 10, the phase difference data associated with each monitoring device 215 varies monotonically with frequency.

Monitoring device phase difference measurements may not each lie along a perfect straight line. This is due to the non-ideal nature of the measurement system. Noise, quantization error and other measurement artifacts lead to errors on the calculated phase difference. Some processing or cleaning of the measurement samples can therefore be desirable to remove outlier samples. This may be particularly beneficial where the unwrapping algorithm fails to properly deal with a discontinuity in the phase.

For example, it can be seen on close inspection in the example of Figure 11 that some samples are missing. These are outliers that have been removed. How the samples are cleaned up may vary from implementation to implementation, but in all cases conventional outlier removal techniques may be used. For instance, in some embodiments, all samples more than 1 standard deviation from a fitted line may be removed. The variation in the gradient between each line C1, C2 etc in Figure 11 may be small, but each line does have a unique gradient. The extent of the variance in the measured gradient for each monitoring device 215 is dependent on the length of antenna 260 and the distance between monitoring devices 215.

As discussed previously, as the measured phase difference is dependent upon frequency and position around antenna 260, the rate of change of the phase differences observed at monitoring device 215 with frequency is, however, proportional to the position of monitoring device 215 around antenna 260.

Hence gradient of the phase difference plot (i.e., the rate of change of phase difference against transmission frequency) for a particular monitoring device 215 can be compared with that of other monitoring devices 215 in battery system 200 to determine a positional relationship between each of monitoring devices 215 along antenna 260. The relative positions of monitoring devices 215 along the length of antenna 260 can then be determined 670 by ordering monitoring devices 215 based on their associated monitoring device rate of change of phase difference with transmission frequency.

Alternatively, an estimate of the absolute positions of each of monitoring devices 215 along the length of antenna 260 can be determined by normalizing the determined gradients and treating the normalized data as representing a distance measurement of the fraction of antenna 260 length along which the monitoring device is located. In some embodiments an absolute position of monitoring device 215 may be determined using knowledge of the layout/design and/or dimensions of battery system 200 and antenna 260 and the estimated position of monitoring device 215.

The determined relative position of monitoring device 215 may then be 680 associated with or mapped to the unique ID of monitoring device 215. Steps 670 to 680 may then be repeated 690 until the relative positions of all monitoring devices 215 have been determined.

In some embodiments, a determined rate of change of phase difference against transmission frequency detected by monitoring device 215 may be compared with reference data to determine the position of monitoring device 215. In such embodiments, such reference data may be stored in the form of a lookup table mapping a determined rate of change of phase difference against transmission frequency to a position along antenna 260 and the position of monitoring device 215 could be determined without knowledge of phase data associated with other monitoring devices 215 in battery system 200.

Although, in battery system 200 described in detail above, processing to determine the location of monitoring device 215 has been described as occurring within controller 250, it will be appreciated that in other embodiments, the extent to which processing occurs at controller 250 or at an individual monitoring device 215 could be varied.

Thus, for example, in some embodiments, monitoring devices 215 could be arranged solely to monitor signals obtained from antenna 260 and return such measurements directly to central controller 250 for processing to determine phase difference measurements. Alternatively, in other embodiments monitoring device 215 could be arranged to process obtained signals and determine a position of the monitoring device 215 along antenna 260 which could be provided to controller 250 only when controller 250 required monitoring device 215 to indicate its location.

It will, however, be appreciated that the above described system has the benefits that the volume of data transmitted via antenna 260 is limited compared to a system in which unprocessed data is returned to controller 250 and that in the above described system, the programing required to convert detected phase difference measurements into absolute or relative position data only needs to be stored in memory 254 of controller 250 and is not duplicated within memories 340 of each of monitoring devices 215.

In some embodiments, the determined monitoring device positions and their associated unique identifiers may be stored in a non-transitory memory. The non-transitory memory may be operatively coupled to controller 250. In some embodiments, the position data may be stored in memories 340 of one or more monitoring devices 215 associated with one or more cells. This helps to ensure that the associated monitoring device 215 has a record of its position in a locally accessible memory, accessible by a battery management system if required. In other embodiments, the determined monitoring device 215 positions and their associated unique identifiers may be held in cloud storage to be accessed by a battery management system when battery system 200 is in use.

It will be appreciated that although, in many practical embodiments, it will be preferable for monitoring device 215 to be associated with a unique ID and for that unique ID to be communicated to controller 250, in some embodiments, monitoring device 215 may not provide a unique ID to controller 250, but may instead merely provide controller 250 with data identifying absolute or relative position measurement to controller 250 when such information is required by controller 250.

It will also be appreciated that rather than cycling through a plurality of transmission frequencies, in an alternative embodiment all the frequencies could be combined into a single waveform and applied simultaneously (a frequency 'comb', consisting of multiple single tones). The phase data at each frequency could then be calculated simultaneously by using a Fourier transform. A second Fourier transform may then be calculated for the same waveform but propagated in the other direction. The output of each Fourier transform is a complex IQ value at each frequency, or a phase/magnitude value at each frequency. IQ values can be transformed in the usual way into phase/magnitude. The first Fourier output may then be subtracted from the second Fourier output to determine the phase difference observed by a monitoring device at each transmission frequency. Calculating a Fourier transform is a computationally intensive step and requires more memory than calculating each phase difference value for one frequency at a time. For this reason, it is less suitable for a small microprocessor or microcontroller. But with sufficient processing power the results would be identical to the system described in detail above.

While method 600 and the associated description describe the determination of monitoring device 215 position by processor 252 of controller 250, in alternative embodiments, it is envisaged that the described methods could potentially be implemented by processor 350 within one or more of the monitoring devices 215. In such embodiments, one of monitoring devices 215 may be in a "master" configuration to determine monitoring device 215 positions while the remaining monitoring devices 215 are in a "slave" configuration.

In some embodiments, monitoring device 215 may determine its position within battery system 200 based on a determined rate of change of phase difference against transmission frequency observed at monitoring device 215 relative to one or more reference rate of change of phase differences against transmission frequency. In some embodiments, monitoring device 215 may receive one or more reference rate of change of phase differences against transmission frequency from other monitoring devices 215 or central controller 250.

Having associated monitoring device 215 unique ID with a position within battery system 200, characteristics of battery cells 210 monitored by monitoring device 215 may be associated with the position within battery system 200, thereby facilitating battery cell 210 diagnostics and maintenance. In an embodiment, where a monitored characteristic of one or more battery cells 210 associated with monitoring device 215 indicates a fault condition is present, the one or more battery cells 210 may be replaced based on the determined location of monitoring device 215 monitoring that particular battery cell 210. Therefore, the determination of monitoring device positions within battery system 200 enables associated faulty battery cells 210 within battery system 200 to be selectively replaced without the need for replacement of the entire battery system 200 or a block of battery cells 210 within battery system 200.

It will also be appreciated that while the embodiments disclosed above relate to technique for determining the position of monitoring devices 215 within a battery system, it will be appreciated that the above-described techniques could be applied in the context of radio receivers associated with a battery cell or group of battery cells in absence of any battery cell monitoring capabilities. In such embodiments, the determination of locations of radio receivers associated with battery cells could provide information which would facilitate the replacement of battery cells in the context of a product recall.

The descriptions of the various embodiments of the present disclosure have been presented for purposes of illustration and are not intended to be exhaustive or limiting to the scope of the disclosure. Many modifications and variations of the disclosed embodiments will be apparent to those of ordinary skill in the art from the herein disclosed embodiments, without departing from the scope of the disclosure. The terminology used herein to disclose the embodiments of the disclosure was chosen to best explain the principles of the embodiments, the practical application or technical improvement over technologies found in the marketplace, or to enable others of ordinary skill in the art to understand the embodiments disclosed herein.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable sub-combination or as suitable in any other described embodiment of the disclosure. Certain features described in the context of various embodiments are not to be considered essential features of those embodiments, unless the embodiment is inoperative without those elements.

## Claims

1. A battery system (200) operable to associate a determined location of a radio receiver (320) within the battery system (200) with an identifier associated with the radio receiver (320), the system (200) comprising:
a plurality of battery cells (210);
a plurality of radio receivers (320) each associated with one or more of the plurality of battery cells (210), wherein each of the plurality of radio receivers (320) is associated with an identifier;
an antenna (260) having a length configured as a loop, wherein the plurality of radio receivers (320) are each communicatively coupled with the antenna (260) via near field radio coupling at different positions along the length of the antenna (260); and
a controller (250) communicatively coupled to a radio manager (270) operable to transmit signals to the plurality of radio receivers (320) via the antenna (260), wherein the controller (350) is operable to:
cause the radio manager (270) to transmit a plurality of signals of different frequencies in a first and then a second direction around the antenna (260);
determine the position of a radio receiver (320) along the length of the antenna (260) based on an observed rate of change of phase difference of signals transmitted in different directions around the antenna (260) with frequency observed at the radio receiver (320); and
associate the determined position with the identifier associated with the radio receiver (320).

2. The system (200) of claim 1, wherein the controller (250) is operable to determine the relative position of a radio receiver (320) along the length of the antenna (260) by:
determining an observed rate of change of phase difference of signals transmitted in different directions around the antenna (260) with frequency observed at each of the plurality of radio receivers (320) communicatively coupled with the antenna (260) at different positions along the length of the antenna (260); and
determining a relative position of a radio receiver (320) along the length of the antenna (260) based on a comparison of the rate of change of phase difference with frequency observed at a radio receiver (320) with the rate of change of phase difference with frequency observed at others of the plurality of radio receivers (320).

3. The system (200) of claim 1, wherein the controller (250) is operable to determine the relative position of a radio receiver (320) along the length of the antenna (260) by:
determining an observed rate of change of phase difference of signals transmitted in different directions around the antenna (260) with frequency observed by a radio receiver (320) communicatively coupled with the antenna (260); and
determining a relative position of the radio receiver (320) along the length of the antenna (260) based on a comparison of the rate of change of phase difference with frequency observed at the radio receiver (320) with reference data indicative of reference rates of change of phase differences with frequency with distance along an antenna (260).

4. The system (200) of claim 2 or 3, wherein the controller (250) is operable to convert a determined relative location of a radio receiver (320) along the length of the antenna (260) into an absolute position within the battery system (200) based on a determined relative location along the length of the antenna (250) and the configuration of the antenna (260) within the battery system (200).

5. The system (200) of any preceding claim, wherein the radio manager (270) is responsive to the controller (250) to transmit a series of constant tone signals of a plurality of different frequencies in a first and then a second direction around the antenna (260).

6. The system (200) of any preceding claim, wherein the controller (250) is configured to cause the radio manager (270) to transmit a signal in a constant direction around the antenna (260) for a period of time (t2) and then cause the radio manager (270) to alternate between transmitting the signal in the first and then the second direction.

7. The system (200) of claim 6, wherein the radio manager (270) is responsive to the controller (250) to transmit a signal including a preamble indicative of the start of the period of time (t1) when radio manager (270) is caused to alternate between transmitting the signal in the first and then the second direction.

8. The system (200) of any preceding claim, wherein each of the plurality of radio receivers (320) is associated with a monitoring device (215) configured to monitor characteristics of one or more of the plurality of battery cells (210).

9. The system (200) of claim 7, wherein at least one of the plurality of monitoring devices (215) comprises one or more sensors (330) operable to monitor at least one of: temperature; power; charge; voltage; or current of one or more of the plurality of battery cells (210) coupled to the monitoring device (215).

10. A controller (250) for use in a battery system (200) comprising a processor (252) and a memory (254), wherein the memory (254) stores processor implementable instructions which cause the processor (252) to:
instruct a radio manager (270) to transmit a plurality of signals of different frequencies in a first and then a second direction around an antenna (260) configured as a loop; and
determine the position of a radio receiver (320) along the length of the antenna (260) based on an observed rate of change of phase difference with frequency of signals transmitted in different directions around the antenna (260) observed at the radio receiver (320).

11. A monitoring device (215) for use in a battery monitoring system (200) comprising:
a radio receiver (320) and a radio transmitter (310) operable to be communicatively coupled via near field radio coupling to an antenna (260) configured as a loop;
a processor (350); and
a memory (340),
wherein the memory (340) stores processor implementable instructions which cause the processor (350) to:
process signals of different frequencies transmitted in different directions around the antenna (260) received by the radio receiver (320) and determine a phase difference between signals of the same frequency transmitted in different directions around the antenna (260); and
cause the radio transmitter (310) to transmit data indicative of observed phase differences.

12. The monitoring device (215) of claim 11, further comprising one or more sensors (330) for determining one or more characteristic of one or more battery cells (210) coupled to the monitoring device (215), wherein the one or more characteristics includes at least one of: temperature; power; charge; voltage; or current.

13. A method (600) for associating a determined location of a radio receiver (320) associated with one or more of a plurality of battery cells (210) within the battery system (200) with an identifier associated with the radio receiver (320), the method comprising:
transmitting plurality of signals of different frequencies in a first (620) and then a second (630) direction around an antenna (260) arranged as a loop;
determining (670) the position of a radio receiver (320) communicatively coupled via near field radio coupling to the antenna (260) based on an observed rate of change of phase difference with frequency of signals transmitted in different directions around the antenna (260) observed by the radio receiver (320); and
associating (680) the determined position with the identifier associated with the radio receiver (320).

14. The method (600) of claim 13, wherein determining (670) the position of a radio receiver (320) communicatively coupled to the antenna (260) comprises:
determining an observed rate of change of phase difference of signals transmitted in different directions around the antenna (260) with frequency observed at each of a plurality of radio receivers (320) communicatively coupled via a near field radio coupling with the antenna (260) at different positions along the length of the antenna (260); and
determining a relative position of a radio receiver (320) along the length of the antenna (260) based on a comparison of the rate of change of phase difference with frequency observed at a radio receiver (320) with the rate of change of phase difference with frequency observed at others of the plurality of radio receivers (320).

15. A method of maintaining a battery system (200) comprising: a plurality of battery cells (210); a plurality of monitoring devices (215) each configured to monitor characteristics of one or more of the plurality of battery cells (210); and an antenna (260) having a length configured as a loop, wherein the plurality of monitoring devices (215) are communicatively coupled via a near field radio coupling with the antenna (260) at different positions along the length of the antenna (260), the method comprising:
utilizing the plurality of monitoring devices (215) to monitor characteristics of the plurality of battery cells (210);
determining a fault condition associated with the one or more battery cells (210) has occurred; and
determining the location of the monitoring device (215) monitoring battery cells (210) with characteristics indicative of a fault having occurred by:
transmitting a plurality of signals of different frequencies in a first (620) and then a second (630) direction around the antenna (260); and
determining (670) the position of a monitoring device (215) along the length of the antenna (260) based on an observed rate of change of phase difference with frequency of signals transmitted in different directions around the antenna (260) observed by that monitoring device (215); and
replacing the one or more battery cells (210) at the determined location.

16. A non-transitory computer interpretable medium (280) storing computer implementable instructions (285) which cause a controller (250) to become configured as a controller (250) in accordance with claim 10 or which cause a monitoring device (215) to become configured as a monitoring device (215) in accordance with any one of claims 11 to 12.

## Patentansprüche

1. Batteriesystem (200), das betreibbar ist, um einen bestimmten Standort eines Funkempfängers (320) innerhalb des Batteriesystems (200) einer Kennung zuzuordnen, die dem Funkempfänger (320) zugeordnet ist, wobei das System (200) Folgendes umfasst:
eine Vielzahl von Batteriezellen (210);
eine Vielzahl von Funkempfängern (320), die jeweils einer oder mehreren aus der Vielzahl von Batteriezellen (210) zugeordnet sind, wobei jedem aus der Vielzahl von Funkempfängern (320) eine Kennung zugeordnet ist;
eine Antenne (260) mit einer Länge, die als Schleife konfiguriert ist, wobei die Vielzahl von Funkempfängern (320) jeweils über Nahfeld-Funkkopplung an verschiedenen Positionen entlang der Länge der Antenne (260) kommunikativ mit der Antenne (260) gekoppelt ist; und
eine Steuerung (250), die kommunikativ an einen Funkmanager (270) gekoppelt ist, der betreibbar ist, um Signale an die Vielzahl von Funkempfängern (320) über die Antenne (260) zu übertragen, wobei die Steuerung (350) zu Folgendem betreibbar ist:
Veranlassen, dass der Funkmanager (270) eine Vielzahl von Signalen mit verschiedenen Frequenzen in einer ersten und dann einer zweiten Richtung um die Antenne (260) überträgt;
Bestimmen der Position eines Funkempfängers (320) entlang der Länge der Antenne (260) basierend auf einer beobachteten Änderungsrate der Phasendifferenz von Signalen, die in verschiedenen Richtungen um die Antenne (260) übertragen werden, mit Frequenz, die an dem Funkempfänger (320) beobachtet wird; und
Zuordnen der bestimmten Position der Kennung, die dem Funkempfänger (320) zugeordnet ist.

2. System (200) nach Anspruch 1, wobei die Steuerung (250) betreibbar ist, um die relative Position eines Funkempfängers (320) entlang der Länge der Antenne (260) durch Folgendes zu bestimmen:
Bestimmen einer beobachteten Änderungsrate der Phasendifferenz von Signalen, die in verschiedenen Richtungen um die Antenne (260) übertragen werden, mit Frequenz, die an jedem aus der Vielzahl von Funkempfängern (320) beobachtet wird, die kommunikativ mit der Antenne (260) an verschiedenen Positionen entlang der Länge der Antenne (260) gekoppelt sind; und
Bestimmen einer relativen Position eines Funkempfängers (320) entlang der Länge der Antenne (260) basierend auf einem Vergleich der Änderungsrate der Phasendifferenz mit Frequenz, die bei einem Funkempfänger (320) beobachtet wird, mit der Änderungsrate der Phasendifferenz mit Frequenz, die bei anderen aus der Vielzahl von Funkempfängern (320) beobachtet wird.

3. System (200) nach Anspruch 1, wobei die Steuerung (250) betreibbar ist, um die relative Position eines Funkempfängers (320) entlang der Länge der Antenne (260) durch Folgendes zu bestimmen:
Bestimmen einer beobachteten Änderungsrate der Phasendifferenz von Signalen, die in verschiedenen Richtungen um die Antenne (260) übertragen werden, mit Frequenz, die durch einen Funkempfänger (320) beobachtet wird, der kommunikativ mit der Antenne (260) gekoppelt ist; und
Bestimmen einer relativen Position des Funkempfängers (320) entlang der Länge der Antenne (260) basierend auf einem Vergleich der Änderungsrate der Phasendifferenz mit Frequenz, die bei dem Funkempfänger (320) beobachtet wird, mit Referenzdaten, die Referenzänderungsraten der Phasendifferenzen mit Frequenz mit Entfernung entlang einer Antenne (260) angeben.

4. System (200) nach Anspruch 2 oder 3, wobei die Steuerung (250) betreibbar ist, um einen bestimmten relativen Standort eines Funkempfängers (320) entlang der Länge der Antenne (260) in eine absolute Position innerhalb des Batteriesystems (200) basierend auf einem bestimmten relativen Standort entlang der Länge der Antenne (250) und der Konfiguration der Antenne (260) innerhalb des Batteriesystems (200) umzuwandeln.

5. System (200) nach einem vorhergehenden Anspruch, wobei der Funkmanager (270) auf die Steuerung (250) reagiert, um eine Reihe von konstanten Tonsignalen einer Vielzahl von verschiedenen Frequenzen in einer ersten und dann einer zweiten Richtung um die Antenne (260) zu übertragen.

6. System (200) nach einem vorhergehenden Anspruch, wobei die Steuerung (250) konfiguriert ist, um zu veranlassen, dass der Funkmanager (270) ein Signal in einer konstanten Richtung um die Antenne (260) für einen Zeitraum (t2) überträgt und dann zu veranlassen, dass der Funkmanager (270) zwischen dem Übertragen des Signals in der ersten und dann der zweiten Richtung wechselt.

7. System (200) nach Anspruch 6, wobei der Funkmanager (270) auf die Steuerung (250) reagiert, um ein Signal zu übertragen, das eine Präambel beinhaltet, die den Beginn des Zeitraums (t1) angibt, wenn veranlasst wird, dass der Funkmanager (270) zwischen dem Übertragen des Signals in der ersten und dann der zweiten Richtung wechselt.

8. System (200) nach einem vorhergehenden Anspruch, wobei jeder aus der Vielzahl von Funkempfängern (320) einer Überwachungsvorrichtung (215) zugeordnet ist, die konfiguriert ist, um Eigenschaften von einer oder mehreren aus der Vielzahl von Batteriezellen (210) zu überwachen.

9. System (200) nach Anspruch 7, wobei zumindest eine aus der Vielzahl von Überwachungsvorrichtungen (215) einen oder mehrere Sensoren (330) umfasst, die betreibbar sind, um zumindest eines von Folgendem zu überwachen: Temperatur; Leistung; Ladung; Spannung; oder Strom von einer oder mehreren aus der Vielzahl von Batteriezellen (210), die an die Überwachungsvorrichtung (215) gekoppelt sind.

10. Steuerung (250) zur Verwendung in einem Batteriesystem (200), das einen Prozessor (252) und einen Speicher (254) umfasst, wobei der Speicher (254) prozessorimplementierbare Anweisungen speichert, die den Prozessor (252) zu Folgendem veranlassen:
Anweisen eines Funkmanagers (270), eine Vielzahl von Signalen mit verschiedenen Frequenzen in einer ersten und dann einer zweiten Richtung um eine Antenne (260) zu übertragen, die als Schleife konfiguriert ist; und
Bestimmen der Position eines Funkempfängers (320) entlang der Länge der Antenne (260) basierend auf einer beobachteten Änderungsrate der Phasendifferenz mit Frequenz von Signalen, die in verschiedenen Richtungen um die Antenne (260) übertragen werden, die an dem Funkempfänger (320) beobachtet wird.

11. Überwachungsvorrichtung (215) zur Verwendung in einem Batterieüberwachungssystem (200), umfassend:
einen Funkempfänger (320) und einen Funksender (310), die betreibbar sind, um über Nahfeld-Funkkopplung kommunikativ an eine Antenne (260) gekoppelt zu sein, die als Schleife konfiguriert ist;
einen Prozessor (350); und
einen Speicher (340),
wobei der Speicher (340) prozessorimplementierbare Anweisungen speichert, die den Prozessor (350) zu Folgendem veranlassen:
Verarbeiten von Signalen mit verschiedenen Frequenzen, die in verschiedenen Richtungen um die Antenne (260) übertragen werden, die durch den Funkempfänger (320) empfangen werden, und Bestimmen einer Phasendifferenz zwischen Signalen derselben Frequenz, die in verschiedenen Richtungen um die Antenne (260) übertragen werden; und
Veranlassen, dass der Funksender (310) Daten überträgt, die beobachtete Phasendifferenzen angeben.

12. Überwachungsvorrichtung (215) nach Anspruch 11, ferner umfassend einen oder mehrere Sensoren (330) zum Bestimmen von einer oder mehreren Eigenschaften von einer oder mehreren Batteriezellen (210), die an die Überwachungsvorrichtung (215) gekoppelt sind, wobei die eine oder mehreren Eigenschaften zumindest eines von Folgendem beinhalten: Temperatur; Leistung; Ladung; Spannung; oder Strom.

13. Verfahren (600) zum Zuordnen eines bestimmten Standortes eines Funkempfängers (320), der einer oder mehreren aus einer Vielzahl von Batteriezellen (210) innerhalb des Batteriesystems (200) zugeordnet ist, einer Kennung, die dem Funkempfänger (320) zugeordnet ist, wobei das Verfahren Folgendes umfasst:
Übertragen einer Vielzahl von Signalen mit verschiedenen Frequenzen in einer ersten (620) und dann einer zweiten (630) Richtung um eine Antenne (260), die als Schleife angeordnet ist;
Bestimmen (670) der Position eines Funkempfängers (320), der über Nahfeld-Funkkopplung kommunikativ an die Antenne (260) gekoppelt ist, basierend auf einer beobachteten Änderungsrate der Phasendifferenz mit Frequenz von Signalen, die in verschiedenen Richtungen um die Antenne (260) übertragen werden, die durch den Funkempfänger (320) beobachtet wird; und
Zuordnen (680) der bestimmten Position der Kennung, die dem Funkempfänger (320) zugeordnet ist.

14. Verfahren (600) nach Anspruch 13, wobei das Bestimmen (670) der Position eines Funkempfängers (320), der kommunikativ an die Antenne (260) gekoppelt ist, Folgendes umfasst:
Bestimmen einer beobachteten Änderungsrate der Phasendifferenz von Signalen, die in verschiedenen Richtungen um die Antenne (260) übertragen werden, mit Frequenz, die an jedem aus einer Vielzahl von Funkempfängern (320) beobachtet wird, die über Nahfeld-Funkkopplung kommunikativ mit der Antenne (260) an verschiedenen Positionen entlang der Länge der Antenne (260) gekoppelt sind; und
Bestimmen einer relativen Position eines Funkempfängers (320) entlang der Länge der Antenne (260) basierend auf einem Vergleich der Änderungsrate der Phasendifferenz mit Frequenz, die bei einem Funkempfänger (320) beobachtet wird, mit der Änderungsrate der Phasendifferenz mit Frequenz, die bei anderen aus der Vielzahl von Funkempfängern (320) beobachtet wird.

15. Verfahren zum Warten eines Batteriesystems (200), umfassend: eine Vielzahl von Batteriezellen (210); eine Vielzahl von Überwachungsvorrichtungen (215), die jeweils konfiguriert sind, um Eigenschaften von einer oder mehreren aus der Vielzahl von Batteriezellen (210) zu überwachen; und eine Antenne (260) mit einer Länge, die als Schleife konfiguriert ist, wobei die Vielzahl von Überwachungsvorrichtungen (215) über eine Nahfeld-Funkkopplung kommunikativ mit der Antenne (260) an verschiedenen Positionen entlang der Länge der Antenne (260) gekoppelt ist, wobei das Verfahren Folgendes umfasst:
Verwenden der Vielzahl von Überwachungsvorrichtungen (215), um Eigenschaften der Vielzahl von Batteriezellen (210) zu überwachen;
Bestimmen, dass ein Fehlerzustand, welcher der einen oder den mehreren Batteriezellen (210) zugeordnet ist, aufgetreten ist; und
Bestimmen des Standortes der Überwachungsvorrichtung (215), die Batteriezellen (210) mit Eigenschaften überwacht, die einen Fehler angeben, der aufgetreten ist, durch:
Übertragen einer Vielzahl von Signalen mit verschiedenen Frequenz in einer ersten (620) und dann einer zweiten (630) Richtung um die Antenne (260); und Bestimmen (670) der Position einer Überwachungsvorrichtung (215) entlang der Länge der Antenne (260) basierend auf einer beobachteten Änderungsrate der Phasendifferenz mit Frequenz von Signalen, die in verschiedenen Richtungen um die Antenne (260) übertragen werden, die durch diese Überwachungsvorrichtung (215) beobachtet werden; und Ersetzen der einen oder mehreren Batteriezellen (210) an dem bestimmten Standort.

16. Nichtflüchtiges computerinterpretierbares Medium (280), das computerimplementierbare Anweisungen (285) speichert, die veranlassen, dass eine Steuerung (250) als Steuerung (250) gemäß Anspruch 10 konfiguriert wird oder die veranlassen, dass eine Überwachungsvorrichtung (215) als Überwachungsvorrichtung (215) gemäß einem der Ansprüche 11 bis 12 konfiguriert wird.

## Revendications

1. Système de batterie (200) servant à associer un emplacement déterminé d'un récepteur radio (320) à l'intérieur du système de batterie (200) avec un identifiant associé au récepteur radio (320), le système (200) comprenant :
une pluralité de cellules de batterie (210) ; et
une pluralité de récepteurs radio (320) associés chacun à un ou plusieurs éléments de la pluralité de cellules de batterie (210), chacun de la pluralité de récepteurs radio (320) étant associé à un identifiant ;
une antenne (260) présentant une longueur conçue sous la forme d'une boucle, la pluralité de récepteurs radio (320) étant chacun couplés en communication à l'antenne (260) par l'intermédiaire d'un couplage radio en champ proche au niveau de différentes positions sur la longueur de l'antenne (260) ; et
un dispositif de commande (250) couplé en communication à un gestionnaire radio (270) servant à transmettre des signaux à la pluralité de récepteurs radio (320) par l'intermédiaire de l'antenne (260), ledit dispositif de commande (350) servant à :
amener le gestionnaire radio (270) à transmettre une pluralité de signaux de différentes fréquences dans une première puis une seconde direction autour de l'antenne (260) ;
déterminer la position d'un récepteur radio (320) sur la longueur de l'antenne (260) en fonction d'un taux de changement observé de différence de phase de signaux transmis dans différentes directions autour de l'antenne (260) avec une fréquence observée au niveau du récepteur radio (320) ; et
associer la position déterminée à l'identifiant associé au récepteur radio (320).

2. Système (200) selon la revendication 1, ledit dispositif de commande (250) servant à déterminer la position relative d'un récepteur radio (320) sur la longueur de l'antenne (260) en :
déterminant un taux observé de changement de différence de phase de signaux transmis dans différentes directions autour de l'antenne (260) avec une fréquence observée au niveau de chacun de la pluralité de récepteurs radio (320) couplés en communication avec l'antenne (260) au niveau de différentes positions sur la longueur de l'antenne (260) ; et
déterminant une position relative d'un récepteur radio (320) sur la longueur de l'antenne (260) en fonction de la comparaison du taux de changement de différence de phase avec une fréquence observée au niveau d'un récepteur radio (320) au taux de changement de différence de phase avec une fréquence observée au niveau d'autres récepteurs radio de la pluralité de récepteurs radio (320).

3. Système (200) selon la revendication 1, ledit dispositif de commande (250) servant à déterminer la position relative d'un récepteur radio (320) sur la longueur de l'antenne (260) en :
déterminant un taux observé de changement de différence de phase de signaux transmis dans différentes directions autour de l'antenne (260) avec une fréquence observée par un récepteur radio (320) couplé en communication avec l'antenne (260) ; et
déterminant une position relative du récepteur radio (320) sur la longueur de l'antenne (260) en fonction de la comparaison du taux de changement de différence de phase avec une fréquence observée au niveau du récepteur radio (320) à des données de référence indiquant des taux de référence de changement de différences de phase avec une fréquence avec une distance le long d'une antenne (260).

4. Système (200) selon la revendication 2 ou 3, ledit dispositif de commande (250) servant à convertir un emplacement relatif déterminé d'un récepteur radio (320) sur la longueur de l'antenne (260) en une position absolue à l'intérieur du système de batterie (200) en fonction d'un emplacement relatif déterminé sur la longueur de l'antenne (250) et de la configuration de l'antenne (260) à l'intérieur du système de batterie (200).

5. Système (200) selon l'une quelconque des revendications précédentes, ledit gestionnaire radio (270) réagissant au dispositif de commande (250) pour transmettre une série de signaux à tonalité constante d'une pluralité de différentes fréquences dans une première puis une seconde direction autour de l'antenne (260).

6. Système (200) selon l'une quelconque des revendications précédentes, ledit dispositif de commande (250) étant configuré pour amener le gestionnaire radio (270) à transmettre un signal dans une direction constante autour de l'antenne (260) pendant une période de temps (t2) puis amener le gestionnaire radio (270) à alterner entre l'émission du signal dans la première puis la seconde direction.

7. Système (200) selon la revendication 6, ledit gestionnaire radio (270) réagissant au dispositif de commande (250) pour transmettre un signal comprenant un préambule indiquant le début de la période de temps (t1) pendant laquelle le gestionnaire radio (270) est amené à alterner entre la transmission du signal dans la première puis dans la deuxième direction.

8. Système (200) selon l'une quelconque des revendications précédentes, chacun de la pluralité de récepteurs radio (320) étant associé à un dispositif de surveillance (215) configuré pour surveiller les caractéristiques d'une ou plusieurs de la pluralité de cellules de batterie (210).

9. Système (200) selon la revendication 7, au moins l'un de la pluralité de dispositifs de surveillance (215) comprenant un ou plusieurs capteurs (330) servant à surveiller au moins l'un des paramètres suivants : la température ; la puissance ; la charge ; la tension ; ou l'intensité d'une ou plusieurs de la pluralité de cellules de batterie (210) couplées au dispositif de surveillance (215).

10. Dispositif de commande (250) destiné à être utilisé dans un système de batterie (200) comprenant un processeur (252) et une mémoire (254), ladite mémoire (254) stockant des instructions pouvant être mises en oeuvre par processeur qui amènent le processeur (252) à :
commander à un gestionnaire radio (270) de transmettre une pluralité de signaux de différentes fréquences dans une première puis une seconde direction autour d'une antenne (260) conçue sous la forme d'une boucle ; et
déterminer la position d'un récepteur radio (320) sur la longueur de l'antenne (260) en fonction d'un taux de changement observé de différence de phase avec la fréquence des signaux transmis dans différentes directions autour de l'antenne (260) observée au niveau du récepteur radio (320).

11. Dispositif de surveillance (215) destiné à être utilisé dans un système de surveillance de batterie (200) comprenant :
un récepteur radio (320) et un émetteur radio (310) pouvant être couplés en communication par l'intermédiaire d'un couplage radio en champ proche à une antenne (260) conçue sous la forme d'une boucle ;
un processeur (350) ; et
une mémoire (340) ;
ladite mémoire (340) stockant des instructions pouvant être mises en oeuvre par processeur qui amènent le processeur (350) à :
traiter les signaux de différentes fréquences transmis dans différentes directions autour de l'antenne (260) reçus par le récepteur radio (320) et déterminer une différence de phase entre les signaux de même fréquence transmis dans différentes directions autour de l'antenne (260) ; et
amener l'émetteur radio (310) à transmettre des données indiquant des différences de phase observées.

12. Dispositif de surveillance (215) selon la revendication 11, comprenant en outre un ou plusieurs capteurs (330) destinés à déterminer une ou plusieurs caractéristiques d'une ou plusieurs cellules de batterie (210) couplées au dispositif de surveillance (215), lesdites une ou plusieurs caractéristiques comprenant au moins un paramètre parmi : la température ; la puissance ; la charge ; la tension ; ou l'intensité.

13. Procédé (600) permettant d'associer un emplacement déterminé d'un récepteur radio (320) associé à une ou plusieurs d'une pluralité de cellules de batterie (210) à l'intérieur du système de batterie (200) avec un identifiant associé au récepteur radio (320), le procédé comprenant :
la transmission d'une pluralité de signaux de différentes fréquences dans une première (620) puis une seconde (630) direction autour d'une antenne (260) agencée sous la forme d'une boucle ;
la détermination (670) de la position d'un récepteur radio (320) couplé en communication par l'intermédiaire d'un couplage radio en champ proche à l'antenne (260) en fonction d'un taux de changement observé de différence de phase avec la fréquence des signaux transmis dans différentes directions autour de l'antenne (260) observée par le récepteur radio (320) ; et
l'association (680) de la position déterminée à l'identifiant associé au récepteur radio (320).

14. Procédé (600) selon la revendication 13, ladite détermination (670) de la position d'un récepteur radio (320) couplé en communication à l'antenne (260) comprenant :
la détermination d'un taux de changement observé de différence de phase de signaux transmis dans différentes directions autour de l'antenne (260) avec une fréquence observée au niveau de chacun d'une pluralité de récepteurs radio (320) couplés en communication par l'intermédiaire d'un couplage radio en champ proche avec l'antenne (260) au niveau de différentes positions sur la longueur de l'antenne (260) ; et
la détermination d'une position relative d'un récepteur radio (320) sur la longueur de l'antenne (260) en fonction de la comparaison du taux de changement de différence de phase avec une fréquence observée au niveau d'un récepteur radio (320) au taux de changement de différence de phase avec une fréquence observée au niveau d'autres récepteurs radio de la pluralité de récepteurs radio (320).

15. Procédé de maintenance d'un système de batterie (200) comprenant : une pluralité de cellules de batterie (210) ; une pluralité de dispositifs de surveillance (215) configurés chacun pour surveiller les caractéristiques d'une ou plusieurs de la pluralité de cellules de batterie (210) ; et une antenne (260) présentant une longueur conçue sous la forme d'une boucle, la pluralité de dispositifs de surveillance (215) étant couplés en communication par l'intermédiaire d'un couplage radio en champ proche avec l'antenne (260) au niveau de différentes positions sur la longueur de l'antenne (260), le procédé comprenant :
l'utilisation de la pluralité de dispositifs de surveillance (215) pour surveiller les caractéristiques de la pluralité de cellules de batterie (210) ;
la détermination qu'un état de défaillance associé à ladite une ou plusieurs cellules de batterie (210) s'est produit ; et
la détermination de l'emplacement du dispositif de surveillance (215) surveillant les cellules de batterie (210) avec des caractéristiques indiquant qu'une défaillance s'est produite en :
transmettant une pluralité de signaux de fréquences différentes dans une première (620) puis une seconde (630) direction autour de l'antenne (260) ; et
déterminant (670) la position d'un dispositif de surveillance (215) sur la longueur de l'antenne (260) en fonction d'un taux de changement observé de différence de phase avec la fréquence des signaux transmis dans différentes directions autour de l'antenne (260) observée par ce dispositif de surveillance (215) ; et
le remplacement desdites une ou plusieurs cellules de batterie (210) au niveau de l'emplacement déterminé.

16. Support non transitoire pouvant être interprété par ordinateur (280) stockant des instructions pouvant être mises en oeuvre par ordinateur (285) qui amènent un dispositif de commande (250) à devenir configuré en tant que dispositif de commande (250) selon la revendication 10 ou qui amènent un dispositif de surveillance (215) à devenir configuré sous la forme d'un dispositif de surveillance (215) selon l'une quelconque des revendications 11 à 12.
